# EUROPÄISCHE PATENTSCHRIFT

(11) **EP 2 195 226 B1**
(45) Veröffentlichungstag und Bekanntmachung des Hinweises auf die Patenterteilung: **11.11.2015**
(21) Anmeldenummer: 08802133.2
(22) Anmeldetag: 13.09.2008
(51) Int. Cl.: B62D 21/15, B62D 25/02, B62D 25/04, B23K 11/14, B23K 11/10, B23K 101/00

(54) **VERFAHREN ZUR HERSTELLUNG EINES WEITESTGEHEND FLÄCHENFÖRMIGEN BAUTEILEVERBUNDES UND WEITESTGEHEND FLÄCHENFÖRMIGER BAUTEILEVERBUND DAZU**
METHOD FOR PRODUCING A LARGELY FLAT COMPONENT ASSEMBLY AND LARGELY FLAT COMPONENT ASSEMBLY PRODUCED USING SAID METHOD
PROCÉDÉ POUR FABRIQUER UN ASSEMBLAGE DE COMPOSANTS PRINCIPALEMENT PLAT ET ASSEMBLAGE DE COMPOSANTS PRINCIPALEMENT PLAT

(30) Priorität: 01.10.2007 DE 102007047036
(43) Veröffentlichungstag der Anmeldung: 16.06.2010
(73) Patentinhaber: Volkswagen Aktiengesellschaft, 38440 Wolfsburg (DE)
(72) Erfinder: LOHMANN, Bernard, 38518 Gifhorn (DE); GAWENS, Bernd, 38550 Isenbüttel (DE)
(86) Internationale Anmeldenummer: PCT/EP2008/007581
(87) Internationale Veröffentlichungsnummer: WO 2009/046808

(56) Entgegenhaltungen:
- EP-A- 1 138 581
- EP-A- 1 953 072
- WO-A-2004/076266
- DE-A1- 4 119 639
- DE-A1- 19 720 109
- DE-C1- 19 531 874
- FR-A- 2 471 250
- JP-A- 8 010 962

## Beschreibung

Die Erfindung betrifft ein Verfahren zur Herstellung eines weitestgehend flächenförmigen Bauteileverbundes und einen weitestgehend flächenförmigen Bauteileverbund dazu nach dem Oberbegriff des Patentanspruches 1 bzw. 5.

Aus der DE 198 57 565 1 ist ein Verfahren zur Herstellung eines Dachaufbaus einer Rohkarosserie eines Kraftfahrzeugs, mit einem Seitenholm, der aus einem Innenprofil und einem Außenprofil gebildet und Bestandteil des Dachrahmens ist, bekannt. Das Innenprofil und das Außenprofil sind jeweils an einem etwa horizontal nach innen gerichteten Innenlängsflansch und an einem Außenlängsflansch, der Tür und/oder Fensterausschnitte nach oben begrenzt, durch Widerstandspunktschweißung verbunden. Nach dem Anbringen des Dachrahmens am Unterbau wird das Dachteil mit einem Dachlängsflansch von oben her auf den Seitenholm bzw. das Außenprofil aufgesetzt und dort in einem ausgewählten Bereich durch Laserschweißung verbunden. Anschließend wird der zugeordnete Seitenwandrahmen mit dem oberen Seitenteil seitlich angesetzt, wobei das Seitenteil mit einem Längsflansch am Außenlängsflansch anliegt und dort durch Widerstandspunktschweißung verbunden wird.

In der Praxis werden, was insbesondere Seitenteile an Kraftfahrzeugkarosserien anbelangt, formgehärtete hochfeste Bauteile verwendet, um etwaigen hohen Beanspruchungen aus einem Crashereignis, insbesondere Seitencrash, begegnen zu können. Das herkömmlich favorisierte Fügeverfahren, nämlich das Widerstandspunktschweißen, bedingt im Querschnitt gesehen relativ lange Flansche, da besagtes Widerstandspunktschweißen mit erhöhtem Wärmeeintrag einhergeht, welcher bei zu kurz gewählten Flanschen eine nachteilige Gefügeveränderung im Werkstoff Stahl hervorrufen kann. Aus den relativ langen Flanschen resultieren wiederum ein verringerter Türeinstiegskomfort aufgrund eines verkleinerten Türausschnittes sowie erhöhte Kosten infolge größer zu bemessender Tür- und/oder auch etwaiger Fensterdichtungen.

Demgegenüber offenbart die DE 199 27 208 B4 ein aufwendiges Verfahren und eine Vorrichtung dazu zum randseitigen Verbinden von Blechen, insbesondere von Karosserieblechen im Automobilbau, wobei der Rand eines Außenbleches über den Rand eines Innenbleches gefalzt wird, die Ränder zusammengepresst werden und vor dem Falzen der Rand wenigstens eines der Bleche mit eingeprägten Vorsprüngen versehen wird, und wobei die Vorsprünge während des Zusammenpressens durch eine an der Bördelbacke angeordnete Elektrode durch Widerstandsbuckelschweißung mit dem jeweils anderen Blech verbunden werden. Zwar ist durch Widerstandsbuckelschweißung ein verringerter Wärmeeintrag in den Stahl zu verzeichnen, jedoch ist diese Maßnahme mit aufwendigen Falzmaßnahmen kombiniert.

Die WO 2004/076266 A beschreibt des Weiteren eine Seitenwand einer Fahrzeugkarosserie in Blechschalenbauweise, welche zumindest aus einer inneren und einer äußeren Seitenwand besteht. Zumindest eine der beiden Seitenwände dient zumindest als Strukturbaustahl und besteht aus Edelstahl. Die beiden Bauteile werden durch Klebung untereinander verbunden, um Kontaktkorrosion zwischen dem Edelstahl und der angrenzenden unedleren Stahlsorte zu vermeiden. Zur Fixierung der beiden Bauteile während der Aushärtezeit des Klebstoffs wird zusätzlich eine Stanzniet-, Clinch- oder Punktschweißverbindung vorgeschlagen. Aus der EP 1 138 581 A2 ist es weiterhin bekannt, ein Karosseriebauteil, insbesondere eine einstückige Türsäule, wie eine A- oder B-Säule eines Tragrahmens, als dünnwandiges Stahlgussteil auszubilden, an welchem Schweißbuckel zur Ankopplung weiterer Bauteile ausgebildet sind. Die EP 1 953 072 B1 beschreibt des Weiteren eine Schweißanordnung dreier Platten einer Aufbauanordnung eines Fahrzeugs, mit einer ersten Außenplatte aus einem Aluminium- oder Aluminiumlegierungsblech, einer zweiten Außenplatte aus einem verzinkten Stahlblech und einer Innenplatte aus einem unverzinkten Stahlblech. In einem Überlappungsteil der drei Platten ist die zweite Außenplatte mit einer Ausnehmung versehen Die zweite Außenplatte ist nunmehr an die Innenplatte punktgeschweißt, während die erste Außenplatte an das frei ` gelassene Teil der Innenplatte punktgeschweißt ist. Aus der JP 08 010962 A ist es ferner an sich bekannt, mehrschichtige Metallbleche, beispielsweise bei Produktion von Fahrzeugtüren, mittels Buckelschweißung untereinander fest zu verbinden. Die schlägt fernerhin vor, ein Innen- und ein Außenblech einer Fahrzeugtür mittels Buckelschweißung untereinander zu verbinden. Schließlich ist aus der DE 41 19 639 A1 eine Vorrichtung zur Abstützung der über einen Stoßfänger eingeleiteten Kräfte bekannt, welche ein an einem Fahrzeuglängsträger durch Schweißung befestigtes Adapterteil umfasst. Das Adapterteil weist zur Aufnahme zweier rundrohrförmiger Querträgerabschnitte, die zusammen einen beide Fahrzeuglängsträger miteinander verbindenden Querträger bilden, zwei am Außenumfang der Querträgerabschnitte anliegende Eindrückungen auf. Nach vorn hin ist der Querträger durch ein Abstützprofil abgedeckt, das beide Querträgerabschnitte bis zu deren halben Durchmesser umfasst und durch Buckelschweißen mit dem Adapterteil verbunden ist.

Vor diesem Hintergrund ist es Aufgabe der Erfindung, ein Verfahren zur Herstellung eines weitestgehend flächenförmigen Bauteileverbundes einer Kraftfahrzeugkarosserie, mit einem Innenteil, einem Außenteil und zumindest einem zwischen denselben angeordneten Verstärkungsteil anzugeben, welches in Verbesserung herkömmlicher Verfahren einen verringerten Herstellungsaufwand an sich mit einem verringerten Wärmeeintrag insbesondere in den Stahl eines formgehärteten hochfesten Bauteiles vorteilhaft kombiniert. Aufgabe der Erfindung ist es auch, einen weitestgehend flächenförmigen Bauteileverbund dazu zu schaffen.

Ausgehend von einem Verfahren zur Herstellung eines weitestgehend flächenförmigen Bauteileverbundes einer Kraftfahrzeugkarosserie in Form eines Seitenteils, welches zumindest eine Türöffnung und/oder eine Fensteröffnung aufweist, mit einem Innenteil, einem Außenteil und zumindest einem zwischen denselben angeordneten Verstärkungsteil, welche im Bereich zueinander korrespondierender Befestigungsflansche aufeinander gesetzt und durch Schweißung zu besagtem Bauteileverbund fest verbunden werden, wird die gestellte Aufgabe dadurch gelöst, dass zunächst das Innenteil mit dem Verstärkungsteil im Bereich besagter Befestigungsflansche durch Widerstandspunktschweißung zu einer Schweißgruppe fest verbunden und nachfolgend das Außenteil im Bereich dieser Befestigungsflansche auf die erzeugte Schweißgruppe aufgesetzt sowie zumindest in crashrelevanten kritischen Flanschabschnitten, die ihrerseits in Eckbereichen der Türöffnungen und/oder Fensteröffnungen benachbart zu Karosseriesäulen angeordnet sind, mit der erzeugten Schweißgruppe durch Widerstandsbuckelschweißung fest verbunden wird.

Durch diese Maßnahme ist es gestattet, die Befestigungsflansche von insbesondere formgehärteten Bauteilen relativ kurz auszubilden, da bei Widerstandsbuckelschweißung ein geringerer Wärmeeintrag zu verzeichnen ist, als bei herkömmlich durchgeführter Widerstandpunktschweißung. Es braucht demgemäß nicht soviel Wärme abgeführt werden, um eine nachteilige Gefügeveränderung im Stahl zu vermeiden. Hieraus resultieren im Hinblick auf den eingangs gewürdigten Stand der Technik neben verringerten Herstellungskosten insbesondere auch verringerte Materialkosten.
Die Unteransprüche beschreiben bevorzugte Weiterbildungen oder Ausgestaltungen der Erfindung.

In Vorbereitung der Widerstandsbuckelschweißung kann zum einen ein Außenteil oder ein Verstärkungsteil mit Schweißbuckeln bereitgestellt werden. Zum anderen kann es auch angezeigt sein, dass Fügepartner bereitgestellt werden, die beide Schweißbuckel aufweisen. So können bei Verwendung sowohl eines Außenteils als auch eines Verstärkungsteils mit Schweißbuckeln, die beiden Fügepartner derart miteinander durch Widerstandsbuckelschweißung verschweißt werden, dass die Schweißbuckel derselben direkt aufeinander stoßend oder nebeneinander angeordnet, mit dem Außenteil oder dem Verstärkungsteil verschweißt werden. Vornehmlich finden hierbei ein Außenteil und/oder ein Verstärkungsteil Verwendung, welche Schweißbuckel mit einem Durchmesser von etwa 2 mm bis etwa 4 mm, vorzugsweise mit einem Durchmesser von etwa 3 mm, aufweisen.

Der weitestgehend flächenförmige Bauteileverbund einer Kraftfahrzeugkarosserie in Form eines Seitenteils, welches zumindest eine Türöffnung und/oder eine Fensteröffnung aufweist, mit einem Innenteil, einem Außenteil und zumindest einem zwischen denselben angeordneten Verstärkungsteil, welche im Bereich zueinander korrespondierender Befestigungsflansche aufeinander gesetzt und durch Schweißung zu besagtem Bauteileverbund fest verbunden sind, zeichnet sich insbesondere dadurch aus, dass das Innenteil mit dem Verstärkungsteil im Bereich besagter Befestigungsflansche durch Widerstandspunktschweißung zu einer Schweißgruppe fest verbunden und das Außenteil im Bereich dieser Befestigungsflansche auf die erzeugte Schweißgruppe aufgesetzt sowie zumindest in crashrelevanten kritischen Flanschabschnitten, die ihrerseits in Eckbereichen der Türöffnungen und/oder Fensteröffnungen benachbart zu einer Karosseriesäule angeordnet sind, mit der erzeugten Schweißgruppe durch Widerstandsbuckelschweißung fest verbunden ist. Die Karosseriesäule kann beispielsweise durch eine B-Säule gebildet sein. In Vorbereitung der Widerstandsbuckelschweißung sind das Außenteil und/oder das Verstärkungsteil mit Schweißbuckeln ausgebildet, wobei im Falle Außenteil und Verstärkungsteil weisen Schweißbuckel auf, dieselben derart angeordnet sind, dass diese direkt aufeinander stoßend oder nebeneinander angeordnet, mit dem Außenteil oder dem Verstärkungsteil verschweißt sind. Was die Schweißbuckel anbelangt, können diese einen Durchmesser von etwa 2 mm bis etwa 4 mm, vorzugsweise einen Durchmesser von etwa 3 mm aufweisen.

Die Erfindung wird nachstehend anhand der in den Zeichnungen schematisch dargestellten Ausführungsbeispiele näher erläutert. Es zeigen:
- Fig. 1: eine perspektivische Explosionsdarstellung eines weitestgehend flächenförmigeri Bauteileverbundes in Form eines Seitenteils einer Kraftfahrzeugkarosserie, bestehend aus einem Innenteil, einem Außenteil und einem Verstärkungsteil, hergestellt nach einem herkömmlichen Verfahren (Stand der Technik),
- Fig. 2: eine Schnittansicht des Bauteileverbundes nach Fig. 1 in einem Dachanschlussbereich,
- Fig. 3: eine erste Fügefolge zur Erzeugung einer Schweißgruppe aus Innenteil und Verstärkungsteil zur weiteren Komplettierung mit einem Außenteil und zur Schaffung des flächenförmigen Bauteileverbundes in Form eines Seitenteils einer Kraftfahrzeugkarosserie im Rahmen einer zweiten Fügefolge,
- Fig. 4: eine Schnittansicht der Schweißgruppe nach Fig. 3 in einem Dachanschlussbereich,
- Fig. 5: die zweite Fügefolge zur Herstellung eines erfindungsgemäßen flächenförmigen Bauteileverburides,
- Fig. 6: eine Schnittansicht des erfindungsgemäßen flächenförmigen Bauteileverbundes nach Fig. 5 in einem Dachanschlussbereich, und
- Fig. 7: die Seitenansicht des erfindungsgemäßen flächenförmigen Bauteileverbundes nach Fig. 6.

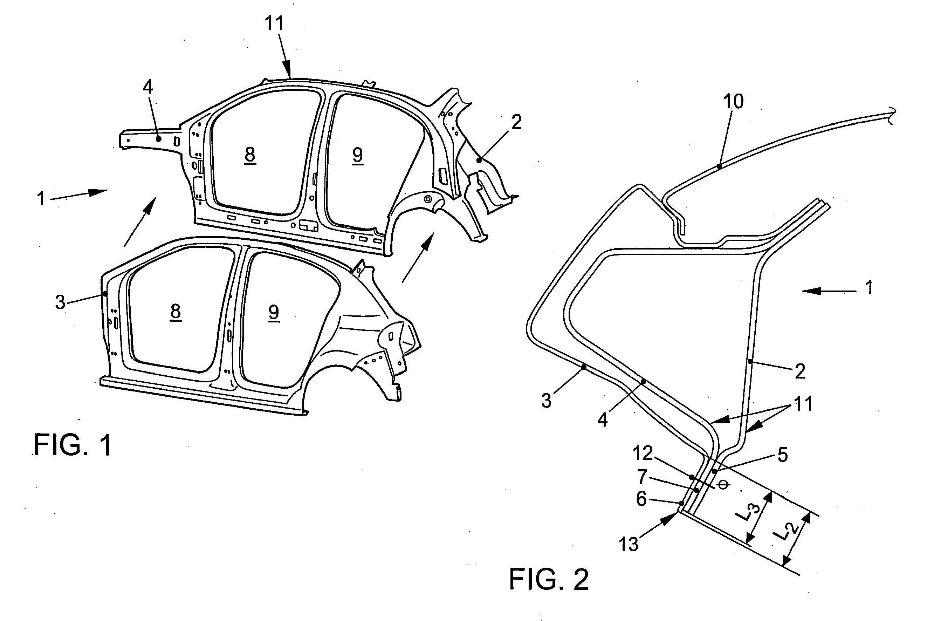

Gemäß den Fig. 1 und 2 ist ein weitestgehend flächenförmiger Bauteileverbund 1 in Form eines Seitenteils einer Kraftfahrzeugkarosserie gezeigt, das sich im Wesentlichen aus einem Innenteil 2, einem Außenteil 3 und zumindest einem zwischen denselben angeordneten Verstärkungsteil 4 zusammensetzt, die ihrerseits im Bereich zueinander korrespondierender Befestigungsflansche. 5, 6, 7 aufeinandergesetzt und durch Schweißung zu besagtem Bauteileverbund 1 fest verbunden werden. Vorliegend weist der Bauteileverbund 1 in Form des Seitenteils zwei Türöffnungen 8, 9 bzw. Türausschnitte auf. Ferner ist ein Dachblech 10 gezeigt (Fig. 2), welches mit besagtem Bauteileverbund 1 durch Schweißung und/oder andere an sich bekannte Fügemaßnahmen fest verbindbar ist.

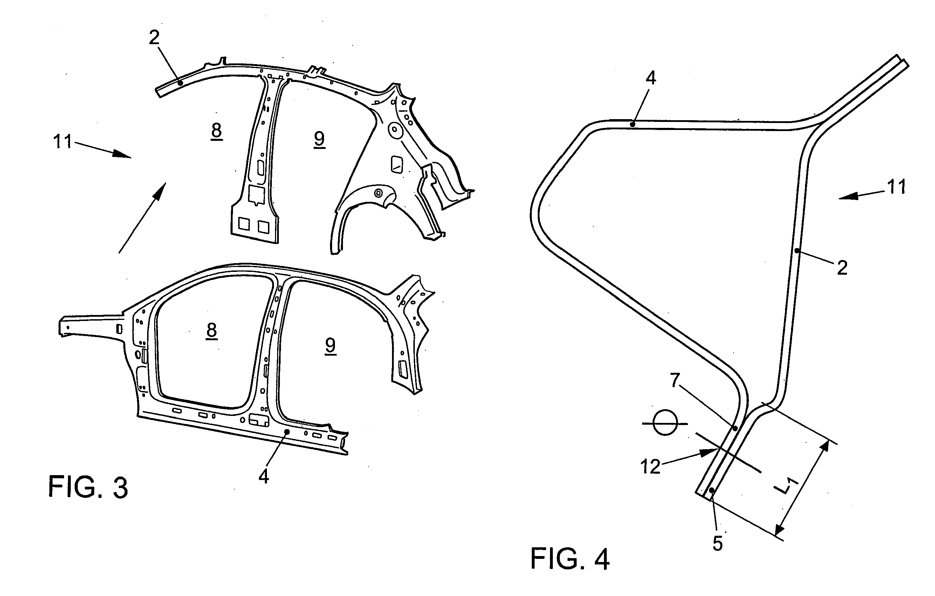

Herkömmlich wird gemäß einer ersten Fügefolge zunächst das Innenteil 2 mit dem Verstärkungsteil 4 zu einer Schweißgruppe 11 verbunden und zwar durch an sich bekannte Widerstandspunktschweißung 12 im Bereich einer Mehrzahl von Fügestellen, wobei mittels elektrischem Strom innerhalb kürzester Zeit eine hohe Wärmeenergie auf eine kleine Fläche der Fügepartner konzentriert und unter Aufbringung einer bestimmten Presskraft auf die Fügestelle eine unlösbare Fügeverbindung bewerkstelligbar ist (Fig. 3 und 4).

Im Hinblick auf diese relativ hohe in die Fügestellen eingebrachte Wärmeenergie ist es erforderlich, die Befestigungsflansche 5, 7 im Querschnitt gesehen entsprechend lang auszubilden. So beträgt die Länge "L₁" derselben in der Praxis etwa 18 mm bis etwa 20 mm, um eine ausreichende Wärmeabfuhr zu gewährleisten und somit etwaige nachteilige Gefügeveränderungen im verwendeten Werkstoff Stahl und/oder nachteiligen Bauteilverzug zu vermeiden (Fig. 4).

Im Anschluss daran wird im Zuge einer zweiten Fügefolge das Außenteil 3 mit seinen Befestigungsflanschen 6 im Bereich der bereits fest verbundenen Befestigungsflansche 5, 7 von Innenteil 2 und Verstärkungsteil 4 auf die erzeugte Schweißgruppe 11 aufgesetzt und mit derselben ebenfalls durch Widerstandspunktschweißung 12 fest verbunden.

Auch die Befestigungsflansche 6 des Außenteiles 3, welches überwiegend als formgehärtetes hochfestes Bauteil ausgebildet ist, müssen aufgrund des erhöhten Wärmeeintrages entsprechend lang ausgebildet sein und weisen bei Ausbildung eines Führungsflanschabschnittes 13, vorliegend in Höhe der Türöffnungen 8, 9, eine Länge "L₂" von etwa 19 mm bis etwa 20 mm und ohne Führungsflanschabschnitt 13 eine Länge "L₃" von etwa 18 mm bis etwa 19 mm auf (Fig. 2).

Insbesondere die große Länge "L₂" bzw. "L₃" des Befestigungsflansches 6 bewirkt erhöhten Materialaufwand und demgemäß erhöhtes Gewicht. Ferner sind, wie oben bereits dargetan, ein verringerter Türeinstiegskomfort aufgrund verkleinerter Türöffnungen 8, 9 bzw. Türausschnitte sowie erhöhte Kosten infolge größer zu bemessender Türdichtungen zu verzeichnen.

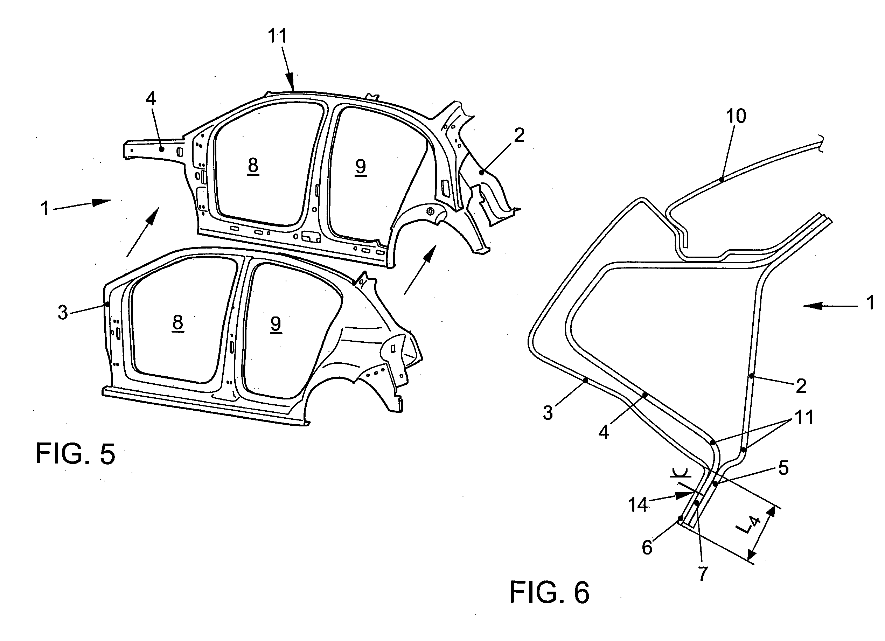

Um diesem nachteiligen Umstand zu begegnen, unterscheidet sich das erfindungsgemäße Herstellungsverfahren von dem oben beschriebenen herkömmlichen Verfahren im Wesentlichen dadurch, dass die durch Widerstandspunktschweißung 12 hergestellte Schweißgruppe 11 aus Innenteil 2 und Verstärkungsteil 4 nunmehr im Zuge der zweiten Fügefolge durch an sich bekannte Widerstandsbuckeischweißung 14 mit einem Außenteil 3 komplettiert respektive fest verbunden wird (Fig. 5 und 6).

Bevorzugt findet hierbei ein Außenteil 3 Verwendung, welches entsprechend der gewünschten Anzahl Fügestellen sogenannte nicht näher gezeigte Schweißbuckel aufweist, die ihrerseits vorab in den Befestigungsflansch 6 des Außenteils 3 eingeprägt werden und zwar derart, dass dieselben in Richtung des Befestigungsflansches 7 des Verstärkungsteiles 4 gerichtet sind. Im Gegensatz zur Widerstandspunktschweißung 12 wird hier die zum Schweißen notwendige Stromdichte nicht durch die Elektroden, sondern durch die Bauteilform, d. h., durch die Schweißbuckel generiert. Die Elektroden dienen lediglich der Stromzuführung und der Krafteinwirkung. Infolgedessen ist ein verringerter örtlicher Wärmeeintrag zu verzeichnen, der es gestattet, kürzere Befestigungsflansche 6 zu wählen.

Demgegenüber besteht auch die Möglichkeit statt des Außenteiles 3 das Verstärkungsteil 4 mit zum Außenteil 3 gerichteten Schweißbuckeln oder sogar beide Bauteile mit aufeinander zu gerichteten Schweißbuckeln zu versehen, die während des eigentlichen Schweißvorganges direkt aufeinander stoßend oder nebeneinander angeordnet, mit dem benachbarten Bauteil verschweißt werden.

Im Rahmen umfangreicher Versuche haben sich Schweißbuckel mit einem Durchmesser von etwa 2 mm bis etwa 4 mm, vorzugsweise mit einem Durchmesser von etwa 3 mm als besonders zweckmäßig erwiesen.

Insbesondere konnten Längen "L₄" für die Befestigungsflansche 6 des Außenteils 3 zwischen etwa 15 mm und etwa 16 mm zur Anwendung kommen, woraus Material-, Gewichts- und demgemäß Kosteneinsparungen, resultierend aus kleinerer Dichtung und kürzerem Befestigungsflansch 6, zu verzeichnen sind. Ferner resultiert hieraus ein erhöhter Türeinstiegskomfort aufgrund vergrößerter Türöffnungen 8, 9 bzw. vergrößerter Türausschnitte, welches sich besonders vorteilhaft bei flach gebauten Kraftfahrzeugen auszeichnet.

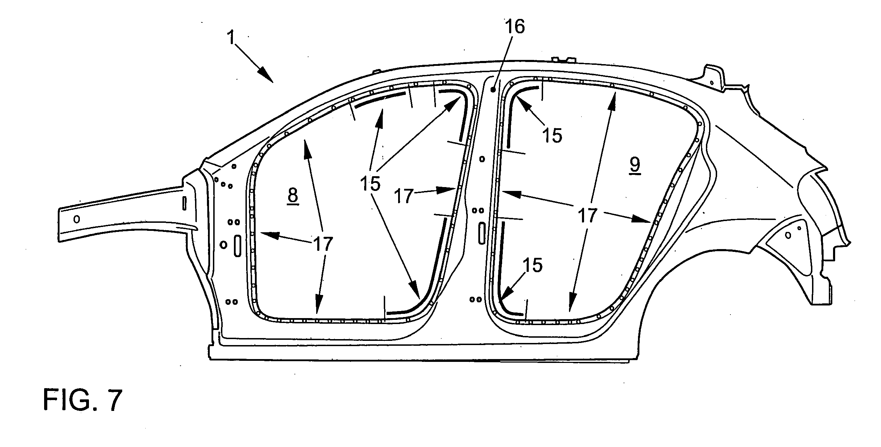

Bezug nehmend auf ein Seitenteil gemäß Fig. 7 mit Türöffnungen 8, 9 und/oder Fensteröffnungen hat sich besagte Widerstandsbuckelschweißung 14 insbesondere für crashrelevante kritische Flanschabschnitte 15 in den Eckbereichen dieser Türöffnungen 8, 9 und/oder Fensteröffnungen benachbart zu Karosseriesäulen 16 bewährt, vorliegend zur B-Säule der Kraftfahrzeugkarosserie, welche während eines Seitencrashes besonders hohen Belastungen ausgesetzt ist. Die crashun- bzw. weniger relevanten Flanschabschnitte 17 können dagegen herkömmlich durch Widerstandspunktschweißung 11 gefügt werden.

Ungeachtet dessen ist es jedoch auch gestattet und demgemäß durch die Erfindung mit erfasst, während der zweiten Fügefolge sämtliche Flanschabschnitte 15, 17 durch Widerstandsbuckelschweißung 14 zu fügen (nicht näher dargestellt).

### Bezugszeichenliste

- 1: Bauteileverbund
- 2: Innenteil
- 3: Außenteil
- 4: Verstärkungsteil
- 5: Befestigungsflansch (Innenteil 2)
- 6: Befestigungsflansch (Außenteil 3)
- 7: Befestigungsflansch (Verstärkungsteil 4)
- 8: Türöffnung
- 9: Türöffnung
- 10: Dachblech
- 11: Schweißgruppe
- 12: Widerstandspunktschweißung
- 13: Führungsflanschabschnitt
- 14: Widerstandsbuckelschweißung
- 15: crashrelevante kritische Flanschabschnitte
- 16: Karosseriesäule (B-Säule)
- 17: crashunrelevante Flanschabschnitte

## Patentansprüche

1. Verfahren zur Herstellung eines weitestgehend flächenförmigen Bauteileverbundes (1) einer Kraftfahrzeugkarosserie in Form eines Seitenteils, welches zumindest eine Türöffnung (8, 9) und/oder eine Fensteröffnung aufweist, mit einem Innenteil (2), einem Außenteil (3) und zumindest einem zwischen denselben angeordneten Verstärkungsteil (4), welche im Bereich zueinander korrespondierender Befestigungsflansche (5, 6, 7) aufeinandergesetzt und durch Schweißung zu besagtem Bauteileverbund (1) fest verbunden werden, **dadurch gekennzeichnet, dass** zunächst das Innenteil (2) mit dem Verstärkungsteil (4) im Bereich besagter Befestigungsflansche (5, 7) durch Widerstandspunktschweißung (12) zu einer Schweißgruppe (11) fest verbunden und nachfolgend das Außenteil (3) im Bereich dieser Befestigungsflansche (5, 7) auf die erzeugte Schweißgruppe (11) aufgesetzt sowie zumindest in crashrelevanten kritischen Flanschabschnitten (15), die ihrerseits in Eckbereichen der Türöffnungen (8, 9) und/oder Fensteröffnungen benachbart zu Karosseriesäulen (16) der Kraftfahrzeugkarosserie angeordnet sind, mit der erzeugten Schweißgruppe (11) durch Widerstandsbuckelschweißung (14) fest verbunden wird.

2. Verfahren nach Anspruch 1, **dadurch gekennzeichnet, dass** in Vorbereitung der Widerstandsbuckelschweißung (14) das Außenteil (3) und/oder das Verstärkungsteil (4) mit Schweißbuckeln bereitgestellt werden.

3. Verfahren nach Anspruch 2, **dadurch gekennzeichnet, dass** bei Verwendung sowohl eines Außenteils (3) als auch eines Verstärkungsteils (4) mit Schweißbuckeln, die beiden Fügepartner derart miteinander durch Widerstandsbuckelschweißung (14) verschweißt werden, dass die Schweißbuckel derselben direkt aufeinander stoßend oder nebeneinander angeordnet, mit dem Außenteil (3) oder dem Verstärkungsteil (4) verschweißt werden.

4. Verfahren nach einem der Ansprüche 1 bis 3, **dadurch gekennzeichnet, dass** ein Außenteil (3) und/oder ein Verstärkungsteil (4) verwendet werden, welche Schweißbuckel mit einem Durchmesser von etwa 2 mm bis etwa 4 mm, vorzugsweise mit einem Durchmesser von etwa 3 mm, aufweisen.

5. Weitestgehend flächenförmiger Bauteileverbund (1) einer Kraftfahrzeugkarosserie in Form eines Seitenteils, welches zumindest eine Türöffnung (8, 9) und/oder eine Fensteröffnung aufweist, mit einem Innenteil (2), einem Außenteil (3) und zumindest einem zwischen denselben angeordneten Verstärkungsteil (4), welche im Bereich zueinander korrespondierender Befestigungsflansche (5, 6, 7) aufeinandergesetzt und durch Schweißung zu besagtem Bauteileverbund (1) fest verbunden sind, **dadurch gekennzeichnet, dass** das Innenteil (2) mit dem Verstärkungsteil (4) im Bereich besagter Befestigungsflansche (5, 7) durch Widerstandspunktschweißung (12) zu einer Schweißgruppe (11) fest verbunden und das Außenteil (3) im Bereich dieser Befestigungsflansche (5, 7) auf die erzeugte Schweißgruppe (11) aufgesetzt sowie zumindest in crashrelevanten kritischen Flanschabschnitten (15), die ihrerseits in Eckbereichen der Türöffnungen (8, 9) und/oder Fensteröffnungen benachbart zu Karosseriesäulen (16) der Kraftfahrzeugkarosserie angeordnet sind, mit der erzeugten Schweißgruppe (11) durch Widerstandsbuckelschweißung (14) fest verbunden ist.

6. Flächenförmiger Bauteileverbund (1) nach Anspruch 5, **dadurch gekennzeichnet, dass** die Karosseriesäule (16) durch eine B-Säule gebildet ist.

7. Flächenförmiger Bauteileverbund (1) nach Anspruch 5 oder 6, **dadurch gekennzeichnet, dass** in Vorbereitung der Widerstandsbuckelschweißung (14) das Außenteil (3) und/oder das Verstärkungsteil (4) mit Schweißbuckeln ausgebildet sind.

8. Flächenförmiger Bauteileverbund (1) nach Anspruch 7, **dadurch gekennzeichnet, dass** im Falle Außenteil (3) und Verstärkungsteil (4) weisen Schweißbuckel auf, dieselben derart angeordnet sind, dass die Schweißbuckel derselben direkt aufeinander stoßend oder nebeneinander angeordnet, mit dem Außenteil (3) oder dem Verstärkungsteil (4) verschweißt sind.

9. Flächenförmiger Bauteileverbund (1) nach einem der Ansprüche 5 bis 8, **dadurch gekennzeichnet, dass** die Schweißbuckel einen Durchmesser von etwa 2 mm bis etwa 4 mm, vorzugsweise einen Durchmesser von etwa 3 mm aufweisen.

## Claims

1. Method for producing a largely flat component assembly (1) of a motor vehicle body in the form of a side part which has at least one door opening (8, 9) and/or a window opening, with an inner part (2), an outer part (3) and at least one reinforcing part (4) which is arranged between said inner part and outer part, which parts are placed on one another in the region of mutually corresponding fastening flanges (5, 6, 7) and are fixedly connected by welding to form said component assembly (1), **characterized in that** first of all the inner part (2) is fixedly connected to the reinforcing part (4) in the region of said fastening flanges (5, 7) by resistance spot welding (12) to form a welded assemblage (11) and subsequently the outer part (3) is placed in the region of said fastening flanges (5, 7) onto the produced welded assemblage (11) and, at least in crash-relevant critical flange sections (15) which, for their part, are arranged in corner regions of the door openings (8, 9) and/or window openings adjacent to body pillars (16) of the motor vehicle body, is fixedly connected to the produced welding assemblage (11) by resistance projection welding (14).

2. Method according to Claim 1, **characterized in that**, in preparation of the resistance projection welding (14), the outer part (3) and/or the reinforcing part (4) are provided with welding projections.

3. Method according to Claim 2, **characterized in that**, when both an outer part (3) and a reinforcing part (4) are used with welding projections, the two joining partners are welded to each other by resistance projection welding (14) in such a manner that the welding projections of said parts, arranged butting directly on each other or next to each other, are welded to the outer part (3) or to the reinforcing part (4).

4. Method according to one of Claims 1 to 3, **characterized in that** use is made of an outer part (3) and/or a reinforcing part (4) which have welding projections with a diameter of approximately 2 mm to approximately 4 mm, preferably with a diameter of approximately 3 mm.

5. Largely flat component assembly (1) of a motor vehicle body in the form of a side part which has at least one door opening (8, 9) and/or a window opening, with an inner part (2), an outer part (3) and at least one reinforcing part (4) which is arranged between said inner part and outer part, which parts are placed on one another in the region of mutually corresponding fastening flanges (5, 6, 7) and are fixedly connected by welding to form said component assembly (1), **characterized in that** the inner part (2) is fixedly connected to the reinforcing part (4) in the region of said fastening flanges (5, 7) by resistance spot welding (12) to form a welded assemblage (11), and the outer part (3) is placed in the region of said fastening flanges (5, 7) onto the produced welding assemblage (11) and, at least in crash-relevant critical flange sections (15) which, for their part, are arranged in corner regions of the door openings (8, 9) and/or window openings adjacent to body pillars (16) of the motor vehicle body, is fixedly connected to the produced welding assemblage (11) by resistance projection welding (14) .

6. Flat component assembly (1) according to Claim 5, **characterized in that** the body pillar (16) is formed by a B pillar.

7. Flat component assembly (1) according to Claim 5 or 6, **characterized in that**, in preparation of the resistance projection welding (14), the outer part (3) and/or the reinforcing part (4) are provided with welding projections.

8. Flat component assembly (1) according to Claim 7, **characterized in that**, in the event of outer part (3) and reinforcing part (4) having welding projections, same are arranged in such a manner that the welding projections of said parts, arranged butting directly on each other or next to each other, are welded to the outer part (3) or to the reinforcing part (4).

9. Flat component assembly (1) according to one of Claims 5 to 8, **characterized in that** the welding projections have a diameter of approximately 2 mm to approximately 4 mm, preferably a diameter of approximately 3 mm.

## Revendications

1. Procédé de fabrication d'un assemblage de composants (1) de forme principalement plate d'une carrosserie de véhicule automobile sous la forme d'une pièce latérale, qui présente au moins une ouverture de porte (8, 9) et/ou une ouverture de fenêtre, avec une partie intérieure (2), une partie extérieure (3) et au moins une partie de renforcement (4) disposée entre celles-ci, lesquelles sont superposées dans la région de brides de fixation se correspondant les unes aux autres (5, 6, 7) et sont connectées fixement par soudage pour former ledit assemblage de composants (1), **caractérisé en ce que** tout d'abord la partie intérieure (2) est connectée fixement à la partie de renforcement (4) dans la région desdites brides de fixation (5, 7) par un soudage par points par résistance (12) pour former un groupe soudé (11) puis la partie extérieure (3) est placée dans la région de ces brides de fixation (5, 7) sur le groupe soudé produit (11) et est connectée fixement au groupe soudé produit (11) par soudage à bossage par résistance (14) au moins dans des portions de bride (15) critiques du point de vue des collisions, qui sont disposées pour leur part dans les régions de coin des ouvertures de porte (8, 9) et/ou des ouvertures de fenêtre à côté de colonnes de carrosserie (16) de la carrosserie du véhicule automobile.

2. Procédé selon la revendication 1, **caractérisé en ce qu'**en préparation du soudage à bossage par résistance (14), la partie extérieure (3) et/ou la partie de renforcement (4) sont pourvues de bossages de soudage.

3. Procédé selon la revendication 2, **caractérisé en ce que** lorsque l'on utilise à la fois une partie extérieure (3) et une partie de renforcement (4) avec des bossages de soudage, les deux partenaires d'assemblage sont soudés l'un à l'autre par soudage à bossage par résistance (14) de telle sorte que leurs bossages de soudage, disposés directement en butée les uns contre les autres ou disposés les uns à côté des autres, soient soudés à la partie extérieure (3) ou à la partie de renforcement (4).

4. Procédé selon l'une quelconque des revendications 1 à 3, **caractérisé en ce qu'**une partie extérieure (3) et/ou une partie de renforcement (4) sont utilisées, lesquelles présentent des bossages de soudage ayant un diamètre d'environ 2 mm à environ 4 mm, de préférence ayant un diamètre d'environ 3 mm.

5. Assemblage de composants (1) de forme principalement plate d'une carrosserie de véhicule automobile sous la forme d'une pièce latérale, qui présente au moins une ouverture de porte (8, 9) et/ou une ouverture de fenêtre, avec une partie intérieure (2), une partie extérieure (3) et au moins une partie de renforcement (4) disposée entre celles-ci, lesquelles sont superposées dans la région de brides de fixation se correspondant les unes aux autres (5, 6, 7) et sont connectées fixement par soudage pour former ledit assemblage de composants (1), **caractérisé en ce que** la partie intérieure (2) est connectée fixement à la partie de renforcement (4) dans la région desdites brides de fixation (5, 7) par un soudage par points par résistance (12) pour former un groupe soudé (11) et soudé produit (11) et est connectée fixement au groupe soudé produit (11) par soudage à bossage par résistance (14) au moins dans des portions de bride (15) critiques du point de vue des collisions, qui sont disposées pour leur part dans les régions de coin des ouvertures de porte (8, 9) et/ou des ouvertures de fenêtre à côté de colonnes de carrosserie (16) de la carrosserie du véhicule automobile.

6. Assemblage de composants (1) de forme plate selon la revendication 5, **caractérisé en ce que** la colonne de carrosserie (16) est formée par une colonne B.

7. Assemblage de composants (1) de forme plate selon la revendication 5 ou 6, **caractérisé en ce qu'**en préparation du soudage à bossage par résistance (14), la partie extérieure (3) et/ou la partie de renforcement (4) sont réalisées avec des bossages de soudage.

8. Assemblage de composants (1) de forme plate selon la revendication 7, **caractérisé en ce que** dans le cas où la partie extérieure (3) et la partie de renforcement (4) présentent des bossages de soudage, celles-ci sont disposées de telle sorte que leurs bossages de soudage, disposés directement en butée les uns contre les autres ou disposés les uns à côté des autres, soient soudés à la partie extérieure (3) ou à la partie de renforcement (4).

9. Assemblage de composants (1) de forme plate selon l'une quelconque des revendications 5 à 8, **caractérisé en ce que** les bossages de soudage présentent un diamètre d'environ 2 mm à environ 4 mm, de préférence un diamètre d'environ 3 mm.
